(19) Europäisches Patentamt
European Patent Office
Office européen des brevets

(11) **EP 3 812 742 A1**

(12) **EUROPEAN PATENT APPLICATION**

(43) Date of publication:
**28.04.2021 Bulletin 2021/17**

(51) Int Cl.:
**G01N 21/41** *(2006.01)*　　　**G01N 21/77** *(2006.01)*
**G01N 21/05** *(2006.01)*

(21) Application number: **19205101.9**

(22) Date of filing: **24.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(71) Applicant: **Technische Hochschule Aschaffenburg**
**63743 Aschaffenburg (DE)**

(72) Inventors:
• **Hellmann, Ralf**
**63743 Aschaffenburg (DE)**
• **Hessler, Steffen**
**63856 Bessenbach (DE)**

(74) Representative: **Lucke, Andreas**
**Boehmert & Boehmert**
**Anwaltspartnerschaft mbB**
**Pettenkoferstrasse 22**
**80336 München (DE)**

(54) **REFRACTIVE INDEX SENSOR**

(57)　Disclosed herein is a refractive index sensor (100) comprising a measurement chamber (102) enclosing a measurement volume (104); a waveguide core (110) comprising a first polymer material, wherein the waveguide core (110) is arranged in the measurement chamber (102) and wherein at least an upper surface and two side surfaces of the waveguide core (110) are in contact with the measurement volume (104); and a first Bragg reflector (112) formed in the waveguide core (110), the first Bragg reflector (112) having a refractive index that varies periodically along an optical axis of the waveguide core (110). At least the upper surface (112-I) and the side surfaces (112-II) of the first Bragg reflector (112) are coated with a high-refractive index coating (114) having a refractive index that is at least 0.3 larger than the spatially averaged refractive index of the first Bragg reflector (112); the high-refractive index coating (114) has a thickness (t) between 50 nm and 400 nm; and the waveguide core (110) has a height (h) between 0.2 $\mu$m and 2.0 $\mu$m in a direction perpendicular to the optical axis.

Fig. 1b

## Description

FIELD OF THE INVENTION

The present invention is in the field of optical sensors. In particular, the invention relates to a refractive index sensor for the analysis of fluids.

BACKGROUND

Determining the composition of fluids is of great importance for biomedical diagnostics, chemistry and environmental monitoring for example. For such applications, a plurality of sensors has been developed, including optical sensors like refractive index sensors for measuring the refractive index of a fluid. The refractive index may for example be probed through an evanescent electromagnetic field extending from the sensor into the fluid. The evanescent field may interact with the surrounding fluid, causing a modification of an optical signal. The optical signal may be detected by the sensor in order to extract the refractive index of the fluid, which in turn may allow for gaining insight into other properties of the fluid such as its composition.

One type of such refractive index sensors employs distributed Bragg reflectors, in particular fiber-based Bragg reflectors, to determine the refractive index of a fluid. A Bragg reflector comprises a periodic structure, e.g. a periodically varying refractive index or a periodically varying diameter of an optical fiber, which gives rise to constructive interference between reflected partial waves at a specific center wavelength. The Bragg reflector may thus exhibit a high reflectivity at the center wavelength, whereas the reflectivity may decrease rapidly when deviating from the center wavelength. A medium surrounding the fiber may shift the center wavelength due to interaction with the evanescent field of an optical mode. This shift depends on the refractive index of the surrounding medium and may thus be used to determine the refractive index of a fluid.

Bragg grating sensors, which are also referred to as Bragg sensors in the following, have been implemented in optical fibers made of silica, see e.g. US 2006/0127024 A1 and W. Liang et al., Appl. Phys. Lett. 86(15), 151122 (2005). Silica-based Bragg sensors, however, require complex fabrication processes for forming the sensors and are thus expensive to produce. In recent years, Bragg sensors in polymer-based waveguides have been developed, which may allow for rapid and reproducible mass-scale production of sensors using standard photolithography techniques, see e.g. S. Hessler et al., Sensors & Actuators B: Chemical, 239, 916 (2017) and M. Rosenberger et al., Journal of Optics 20(1), 01LT02 (2017). Yet, due to the limited sensitivity of these sensors, in particular in the range of typical refractive indices of fluids between 1.3 and 1.5, sensitive detection equipment is required to reliably determine the refractive index of a sample.

SUMMARY OF THE INVENTION

The object of the invention is thus to provide a refractive index sensor with improved sensitivity, which can be fabricated in a flexible, cost-effective and reproducible manner.
This object is met by a refractive index sensor according to claim 1, a method of manufacturing a refractive index sensor according to claim 8 and a lab-on-a-chip device according to claim 12. Embodiments of the present invention are detailed in the dependent claims.
The refractive index sensor according to the invention comprises a measurement chamber enclosing a measurement volume and a waveguide core comprising a first polymer material. The waveguide core is arranged in the measurement chamber. At least an upper surface and two side surfaces of the waveguide core are in contact with the measurement volume. The refractive index sensor further comprises a first Bragg reflector formed in the waveguide core, the first Bragg reflector having a refractive index that varies periodically along an optical axis of the waveguide core. At least the upper surface and the side surfaces of the first Bragg reflector are coated with a high-refractive index coating having a refractive index that is at least 0.3 larger than the spatially averaged refractive index of the first Bragg reflector. The high-refractive index coating has a thickness between 50 nm and 400 nm. The waveguide core has a height between 0.2 $\mu$m and 2.0 $\mu$m in a direction perpendicular to the optical axis.
The waveguide core is arranged in the measurement chamber. The waveguide core may for example be arranged on an inner surface of the measurement chamber, e.g. such that one surface of the waveguide core is in contact with this inner surface of the measurement chamber. The respective inner surface may e.g. be a bottom inner surface of the measurement chamber. The inner surface on which the waveguide core is arranged is thus also referred to as the bottom surface in the following. This, however, does not imply a certain orientation with respect to the direction of gravity and, depending on the orientation of the refractive index sensor, the inner surface on which the waveguide core is arranged may also be a lateral inner surface or an upper inner surface of the measurement chamber. The surface of the waveguide core in contact with the bottom surface of the measurement chamber is referred to as the bottom surface of the waveguide core. Preferably, the bottom surface of the measurement chamber and the bottom surface of the waveguide core are planar surfaces, but may also be curved surfaces in some embodiments. In some examples, a part of the waveguide core may be embedded in a wall of the measurement chamber. A bottom portion of the waveguide core may e.g. extend into the bottom wall of the measurement chamber, i.e. at least a part of the bottom surface of the waveguide core may lie below the bottom inner surface of the measurement chamber.

In other embodiments, the waveguide core may be a free-standing waveguide core, which is surrounded by the measurement volume in every direction perpendicular to the optical axis, i.e. at least a part of the bottom surface may also be in contact with the measurement volume.

The waveguide core further has an upper surface opposing the bottom surface and two side surfaces. Each of these surfaces may be a planar surface or a curved surface. In a preferred embodiment, the waveguide core has a rectangular cross section, i.e. the upper and bottom surfaces are planar and parallel to each other and the two side surfaces are planar and parallel to each other. The upper surface and the side surfaces of the waveguide core face the measurement volume and are not in contact with a surface of the measurement chamber. Accordingly, the waveguide core may e.g. protrude from the bottom surface of the measurement chamber into the measurement volume or may be a free-standing waveguide core.

The waveguide core comprises or consists of a first polymer material, preferably a polymer photoresist, e.g. a positive or negative photoresist which may be patterned using ultraviolet light. The first polymer material may for example be an epoxy resin. In a preferred embodiment, the first polymer material has a higher refractive index than a material of the bottom surface of the measurement chamber such that total internal reflection can occur at the interface between the waveguide core and the bottom surface of the measurement chamber. Alternatively, an additional cladding layer having a lower refractive index than the first polymer material may be arranged between the bottom surface of the measurement chamber and the waveguide core. If the measurement chamber is filled with a fluid having a lower refractive index than the first polymer material, total internal reflection may also occur at the interface between the waveguide core and the fluid, thereby creating a waveguide with transversally confined modes propagating along the waveguide core. The propagation path of the confined modes is referred to herein as the optical axis of the waveguide core.

A first Bragg reflector is formed in the waveguide core. The first Bragg reflector exhibits a periodically varying index of refraction along the optical axis, e.g. an alternating pattern of layers or regions with two different refractive indices or a continuously varying refractive index, e.g. a sinusoidally varying refractive index. In some examples, transverse dimensions of the first Bragg reflector may vary periodically in order to create a periodically varying effective index of refraction. The first Bragg reflector may extend over the entire length of the waveguide core or a part thereof and may extend over the entire cross section of the waveguide core or a part thereof. In a preferred embodiment, the first Bragg reflector also comprises or consists of the first polymer material, whose refractive index may e.g. have been modified locally by exposure to ultraviolet light.

Light coupled into a given mode of the waveguide may be reflected by the Bragg reflector due to the periodically varying index of refraction, wherein the Bragg reflector exhibits a maximum reflectivity at a center wavelength

$$\lambda_B = 2\, n_{eff}\, d.$$

Here, d is the spatial period of the refractive index pattern and $n_{eff}$ is the effective refractive index for the given mode, also referred to as the modal effective refractive index. The mode may partially extend from the waveguide core in a transverse direction, e.g. into the measurement volume. Thus, the modal effective refractive index may also depend on the refractive index in the vicinity of the waveguide core, e.g. the refractive index of a sample fluid in the measurement volume. The center wavelength of the first Bragg reflector may for example be between 500 nm and 1650 nm. In a preferred embodiment, the spatial period d and/or the first polymer material are chosen such that the center wavelength of the first Bragg reflector is between 1000 nm and 1650 nm, e.g. in the extended standard telecommunication range between 1460 nm and 1620 nm or in the range between 1250 nm and 1350 nm, where polymers may exhibit a low optical attenuation.

At least the upper surface and the side surfaces of the first Bragg reflector are coated with a high-refractive index coating, wherein surfaces of the first Bragg reflector refer to surfaces of the waveguide core in the portion of the waveguide core in which the first Bragg reflector is arranged. Preferably, the high-refractive index coating covers the entire upper surface and side surfaces of the first Bragg reflector. In some embodiments, the bottom surface of the measurement chamber may also be coated by the high-refractive index coating at least in part, e.g. a portion of the bottom surface of the measurement chamber adjacent to the first Bragg reflector. If the waveguide core is a free-standing waveguide core, the bottom surface of the first Bragg reflector may also be coated with the high-refractive index coating in some embodiments. The thickness of the high-refractive index coating is between 50 nm and 400 nm. In a preferred embodiment, the thickness of the high-refractive index coating is no less than 100 nm and/or no more than 300 nm, in one example no less than 150 nm and/or no more than 250 nm. Preferably, the thickness of the high-refractive index coating is homogenous. The thickness of the high-refractive index coating may e.g. vary by less than 20%, preferably by less than 10% over the entire upper and side surfaces of the first Bragg reflector.

The high-refractive index coating has a refractive index that is at least 0.3, preferably at least 0.5 larger than the spatially averaged refractive index of the first Bragg reflector, i.e. the refractive index averaged over the entire length of the first Bragg reflector along the optical axis. In a preferred embodiment, the high-refractive index coating comprises or consists of $TiO_2$, which has a refractive index of about n= 2.1 at 1550 nm. Additionally or alternatively, the high-refractive index coating may e.g. comprise or consist of zinc oxide, tantalum tin oxide, tantalum pentoxide, zirconium dioxide, silicon, amorphous silicon or a combination thereof.

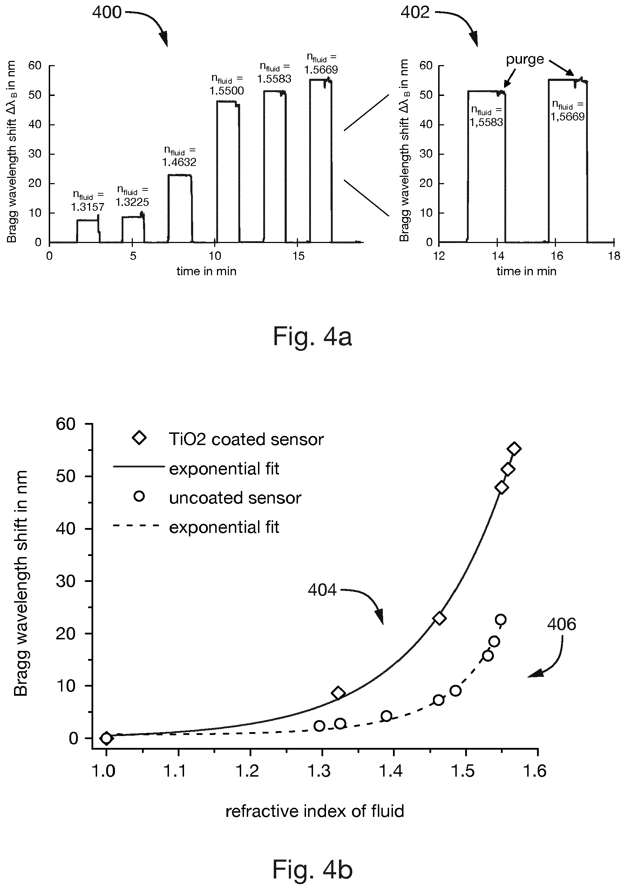

The high-refractive index coating may be advantageous since it may increase the fraction of a mode of the waveguide that extends into the measurement volume. The high-refractive index coating may thus increase the sensitivity of the center wavelength with regard to the refractive index of a sample fluid, i.e. the rate with which the center wavelength $\lambda_B$ shifts when changing the refractive index of the sample fluid $n_{fluid}$, $\Delta\lambda_B/\Delta n_{fluid}$. While a similar coating on an upper surface of a waveguide embedded in a substrate has only yielded a minor improvement in sensitivity, see M. Rosenberger et al., Journal of Optics 20(1), 01LT02 (2017), the inventors have observed that surprisingly a very substantial improvement may be achieved by coating the upper surface as well as the side surfaces of a waveguide protruding into the measurement volume (see Fig. 4b and below).

The waveguide core has a height between 0.2 $\mu$m and 2.0 $\mu$m in a direction perpendicular to the optical axis. In some embodiments, the height of the waveguide core may be the smallest extent of the waveguide core in any direction perpendicular to the optical axis. In some examples, the height of the waveguide core may be the extent of the waveguide core perpendicular to the bottom surface of the measurement chamber, e.g. if the waveguide core is arranged on the bottom surface of the measurement chamber. The inventors have observed that reducing the height of the waveguide core may further increase the sensitivity - even though it reduces a coupling efficiency to the waveguide and thus the amount of light that can be coupled into and out of the waveguide. In some embodiments, the height of the waveguide core is less than 1.5 $\mu$m, in a preferred embodiment less than 1.0 $\mu$m, in one example less than 0.8 $\mu$m. A width of the waveguide core perpendicular to the optical axis may for example be between 2.0 $\mu$m and 20 $\mu$m. The width of the waveguide core may e.g. be measured in a direction perpendicular to the direction in which the height of the waveguide core is measured, e.g. parallel to the bottom surface of the measurement chamber, and/or may be the largest extent of the waveguide core in any direction perpendicular to the optical axis.

By adjusting the thickness of the high-refractive index coating and the height of the waveguide core, the inventors have observed shifts of the center wavelength of up to 450 nm per refractive index unit of the sample fluid. This is almost an order of magnitude better than previously reported sensitivities for polymer-based refractive index sensors, see e.g. S. Hessler et al., Sensors & Actuators B: Chemical, 239, 916 (2017). The present invention thus allows for measurements of the refractive index of a sample fluid with high precision. With a spectral resolution of 1 pm, for example, changes in the refractive index of the sample fluid down to about $2.2 \cdot 10^{-6}$ may be detected. This facilitates precise sensing even with cheaper and less sophisticated detection devices.

In a preferred embodiment, the high-refractive index coating comprises a functionalized detection layer that is configured to interact with a substance from a sample fluid in the measurement volume, e.g. by forming a chemical bond with the substance, undergoing a chemical reaction with the substance and/or adsorbing or absorbing the substance. This interaction may modify the modal effective refractive index of the first Bragg reflector depending on a concentration of the substance in the measurement chamber. In particular, the detection layer may be configured to specifically bind to or react with one or more substances, e.g. a specific molecule such as 02, CO, CO2 or glucose. In some embodiments, the functionalized detection layer may be configured to bind to or to react with a biomarker in the measurement volume such as bacteria, viruses or proteins, for example albumin or C-reactive proteins For this, the detection layer may comprise corresponding binding sites, e.g. antibodies. The detection layer may for example be arranged on a high-refractive index layer of the high-refractive index coating. In other examples, the high-refractive index layer itself may be the functionalized detection layer.

The refractive index sensor may further comprise a microfluidic structure, e.g. a microfluidic structure in fluid communication with the measurement chamber. The microfluidic structure may have an inlet and an outlet that are in fluid communication with each other through the microfluidic structure, e.g. through one or more channels. The microfluidic structure may comprise additional elements, e.g. a microvalve and/or a micropump. In one example, the microfluidic structure may comprise an additional port, e.g. to provide a second fluid in addition to the sample fluid. Additionally or alternatively, the microfluidic structure may comprise a reservoir storing a fluid that is to be mixed with the sample fluid, e.g. a fluid containing a detection substance that is to react with a substance in the sample fluid.

In some embodiments, the measurement volume may be a channel of the microfluidic structure or at least a part thereof. In one example, the optical axis of the waveguide core may be aligned with a longitudinal axis of the channel, wherein the longitudinal axis of the channel may e.g. correspond to the flow axis of a fluid flowing along the channel.

In a preferred embodiment, the measurement chamber and/or the microfluidic structure are formed by a patterned layer of a second polymer material arranged between a lower substrate and an upper substrate. The second polymer layer may for example be sandwiched between two opposing surfaces of the lower and upper substrates such that both surfaces are in contact with the second polymer layer. Accordingly, the structure of the second polymer layer may define the shape of the measurement chamber and/or of the microfluidic structure in a horizontal plane, wherein the lower and upper substrate may seal off the measurement chamber and/or the microfluidic structure in the vertical direction to form a closed system. The lower and/or upper substrate may comprise one or more openings to provide an inlet and/or an outlet for the measurement chamber and/or for the microfluidic structure. Preferably, the second polymer material is a polymer photoresist, e.g. a positive or negative photoresist which may be patterned using ultraviolet light. The second polymer material may for example be an epoxy resin or a cyclo-olefin copolymer. In some examples, a part of the waveguide core may be embedded in the second polymer material. Preferably, the second polymer material has a lower refractive index than the first polymer material. In other examples, an additional cladding layer may be arranged between the second polymer material and the part of the waveguide core embedded in the second polymer material.

The refractive index sensor may also comprise a second Bragg reflector. The second Bragg reflector may for example be formed in a waveguide core similar to the first Bragg reflector. The second Bragg reflector may be formed in the same waveguide core as the first Bragg reflector, e.g. at a different position along the optical axis of the waveguide core. Alternatively, the second Bragg reflector may be formed in a separate waveguide core, wherein the two waveguide cores are preferably connected to a common coupling waveguide, e.g. through an integrated optical splitter or a fiber-optic splitter as described below.

The second Bragg reflector may be similar to the first Bragg reflector. In particular, the second Bragg reflector may also be formed in a portion of a waveguide core that is in contact with the measurement volume. The second Bragg reflector may have a similar geometry and/or composition and/or may also be coated with a high-refractive index coating. Preferably, the high-refractive index coating of the second Bragg reflector also comprises a functionalized detection layer. The detection layer of the second Bragg reflector may be different from the detection layer of the first Bragg reflector and may e.g. be configured to interact with a different substance as described below.

In a preferred embodiment, a center wavelength of the second Bragg reflector differs by at least 10 nm, preferably by at least 50 nm from a center wavelength of the first Bragg reflector. This may allow for distinguishing light reflected by the first and second Bragg reflectors even when connected to a common coupling waveguide. The second Bragg reflector may for example have a different period and/or a different modal effective refractive index than the first Bragg reflector.

In some embodiments, the second Bragg reflector may be a reference Bragg reflector that is not in contact with the measurement volume. The reference Bragg reflector may for example be used to measure a temperature and/or humidity, which may e.g. be used to calibrate measurements performed with the first Bragg reflector. The reference Bragg reflector may for example be embedded in a wall of the measurement chamber and/or the microfluidic structure, e.g. in the lower or upper substrate and/or in the second polymer material layer. In other examples, the reference Bragg reflector may also be arranged on an inner surface of the measurement chamber or may be a free-standing waveguide, but may be separated from the measurement volume by a separation layer, e.g. an additional cladding layer.

In some embodiments, the refractive index sensor may comprise more than two Bragg reflectors, e.g. two or more Bragg reflectors in contact with the measurement volume and a reference Bragg sensor that is not in contact with the measurement volume.

The invention further provides a method of manufacturing a refractive index sensor. The method comprises (1) forming a layer of a first polymer material on a lower substrate, the layer having a thickness between 0.2 $\mu$m and 2.0 $\mu$m; (2) patterning the first polymer material layer to form a waveguide core having an exposed upper surface and two exposed side surfaces; (3) forming a first Bragg reflector in the waveguide core, the first Bragg reflector having a refractive index that varies periodically along an optical axis of the waveguide core, and (4) coating the upper surface and the side surfaces of the first Bragg reflector with a high-refractive index coating having a refractive index that is at least 0.3 larger than the spatially averaged refractive index of the first Bragg reflector, wherein the high-refractive index coating has a thickness between 50 nm and 400 nm. The above numbering of the method steps does not indicate a certain order of execution of the method. As far as technically feasible, the method may be executed in an arbitrary order and steps may also be executed simultaneously at least in part.

The lower substrate may for example comprise or consist of plastic, preferably a biocompatible and/or transparent plastic, e.g. a cyclic olefin copolymer, polymethyl methacrylate or polydimethylsiloxane. The lower substrate may e.g. have a planar upper surface, on which the first polymer material layer is formed. The first polymer material layer may for example be formed by spin coating of the first polymer material, wherein a rotation speed and/or duration of the spin coating process may be adapted to achieve the desired thickness. The thickness of the first polymer material layer may be chosen based on a desired thickness of the waveguide core. In some examples, the thickness of the first polymer material layer may be less than 1.5 $\mu$m, in a preferred embodiment less than 1 $\mu$m, in one example less than 0.8 $\mu$m.

Subsequently, the first polymer material layer is patterned to form the waveguide core. Preferably, the first polymer material is a photoresist and patterned by photolithography as detailed below. Additionally or alternatively, patterning the first polymer material layer may e.g. comprise etching, laser ablation and/or mechanical structuring of the first polymer material layer. Preferably, all of the first polymer material layer apart from the waveguide core is removed during the patterning, exposing the lower substrate. In some embodiments, patterning the first polymer material layer may also comprise reducing a height of the waveguide core.

The waveguide core may be similar to the waveguide core of the refractive index sensor according to the invention as described above. The waveguide core may for example be arranged on the lower substrate, i.e. the upper and side surfaces of the waveguide core may be exposed whereas a bottom surface of the waveguide core may be in contact with the lower substrate. Alternatively, at least a part of the waveguide core may be a free-standing waveguide, i.e. at least a part of the bottom surface may also be exposed. In some examples, patterning the first polymer material layer may comprise removing a dummy structure adjacent to the bottom surface of the waveguide core. The dummy structure may e.g. be a part of the first polymer material layer and/or of the lower substrate or may be an additional structure, which may e.g. be formed on the lower substrate prior to forming the first polymer material layer.

The first Bragg reflector is preferably formed after patterning the first polymer material layer, but may also be formed at least in part prior to or during patterning of the first polymer material. In a preferred embodiment, the first Bragg reflector is formed by exposing the first polymer material to light as described below. Additionally or alternatively, forming the first Bragg reflector may comprise forming layers with different refractive indices and/or modifying a height and/or width of the waveguide core.

The upper surface and the side surfaces of the first Bragg reflector are coated with the high-refractive index coating, e.g. by physical and/or chemical vapor deposition. In a preferred embodiment, the high-refractive index coating is deposited by sputter deposition. In a preferred embodiment, the thickness of the high-refractive index coating is no less than 100 nm and/or no more than 300 nm, in one example no less than 150 nm and/or no more than 250 nm. Preferably, the thickness of the high-refractive index coating is homogenous. The thickness of the high-refractive index coating may e.g. vary by less than 20%, preferably by less than 10% over the entire upper and side surfaces of the first Bragg reflector. Coating the first Bragg reflector may comprise changing an orientation of the refractive index sensor, e.g. relative to a sputter source. This may be advantageous for achieving a more homogeneous thickness throughout the upper surface and the side surfaces of the first Bragg reflector.

In some embodiments, the method may further comprise forming a layer of a second polymer material on the lower substrate, e.g. by spin coating. The second polymer material may be a polymer photoresist or a cyclo-olefin copolymer, e.g. as described above. Preferably, the second polymer material has a smaller refractive index than the first polymer material. In other examples, the method may also comprise forming an additional cladding layer on a part of the waveguide core that is to be embedded in the second polymer material.

The method may also comprise patterning the second polymer material layer, e.g. to form a measurement chamber, in particular a microfluidic structure. The microfluidic structure may be formed such that at least a part of the first Bragg reflector is arranged in a channel of the microfluidic structure, e.g. such that the optical axis of the waveguide core is aligned with a longitudinal direction of the channel. A part of the first Bragg reflector and/or of the waveguide core may be embedded in the second polymer material layer. The method may further comprise attaching an upper substrate to the second polymer material layer such that the second polymer material layer is arranged between the lower substrate and the upper substrate, e.g. as described above. The upper substrate may be similar to the lower substrate.

The high-refractive index coating has a refractive index that is at least 0.3, preferably more than 0.5 larger than the spatially averaged refractive index of the first Bragg reflector. In a preferred embodiment, the high-refractive index coating comprises or consists of $TiO_2$, which has a refractive index of about n = 2.1 at 1550 nm. Additionally or alternatively, the high-refractive index coating may e.g. comprise or consist of zinc oxide, tantalum tin oxide, tantalum pentoxide, zirconium dioxide, silicon, amorphous silicon or a combination thereof.

The method may also comprise forming a functionalized detection layer in and/or on the high-refractive index coating, wherein the functionalized detection layer is configured to interact with a substance from a sample fluid, e.g. as described above. This may comprise depositing an additional layer configured to interact with the substance on the high-reflective index coating. Additionally or alternatively, this may comprise attaching binding sites, e.g. antibodies, to the high-refractive index coating, for example by drop coating.

Preferably, the first polymer material is a photoresist, e.g. as described above, and is patterned by photolithography. Accordingly, patterning the first polymer material layer may comprise exposing the first polymer material layer to light, in particular ultraviolet light, e.g. using an appropriate mask or a focused laser beam to define the shape of the waveguide. Patterning the first polymer material layer may further comprise developing the first polymer material, e.g. by removing exposed or non-exposed portions using a solvent or developer.

In a preferred embodiment, the first Bragg reflector is formed by exposing the first polymer material to light, in particular ultraviolet light, e.g. UV-C or UV-B light. Interaction between high-energy photons and the first polymer material may alter the refractive index of the first polymer material depending on the local light intensity. A periodic pattern may be created by interference using coherent illumination, e.g. between two intersecting UV laser beams or by imprinting a phase pattern onto a single laser beam, for example with a phase mask.

Forming the first Bragg reflector may comprise measuring a reflectivity of the first Bragg reflector and dynamically adjusting an exposure dose, e.g. an exposure intensity and/or duration, based on the measured reflectivity.

The method may further comprise connecting a coupling waveguide to the waveguide core. The coupling waveguide may for example be an optical fiber, preferably a single-mode optical fiber. A mode field diameter of the optical fiber may be larger than the height of the waveguide core and may e.g. be between 3 $\mu$m and 15 $\mu$m. An output facet of the coupling waveguide may e.g. be attached to an input facet of the waveguide core using an optical adhesive. Preferably, the coupling waveguide has an input facet having a standardized fiber connector, e.g. an FC/APC or FC/PC connector, for example to connect the coupling waveguide to a light source and/or a light detector, e.g. a photodiode or a spectrometer.

The method may also comprise forming a second Bragg reflector, in particular a second Bragg reflector in a waveguide core similar to the first Bragg reflector. The second Bragg reflector may be similar to the first Bragg reflector or may be a reference Bragg reflector that is not to be in contact with the measurement volume. Preferably, a center wavelength of the second Bragg reflector differs by at least 10 nm, preferably by at least 50 nm from a center wavelength of the first Bragg reflector. Forming the second Bragg reflector may comprise patterning of a polymer material layer, e.g. the first or second polymer material layer, and/or may comprise patterning a substrate, e.g. the lower or upper substrate. Forming the second Bragg reflector may further comprise forming a periodically varying refractive index pattern, e.g. in the patterned first or second polymer layer or the lower or upper substrate. In some examples, forming the second Bragg reflector may further comprise forming a high-refractive index coating on the second Bragg reflector, e.g. as described above. Preferably, the method may further comprise forming a functionalized detection layer in and/or on the high-refractive index coating of the second Bragg reflector, wherein the detection layer of the second Bragg reflector may be different from the detection layer of the first Bragg reflector and may e.g. be configured to interact with a different substance of the sample fluid. In some examples, forming the second Bragg reflector may comprise forming a cladding layer on the second Bragg reflector. Forming the second Bragg reflector may also comprise connecting the second Bragg reflector to a coupling waveguide, which may for example be the same coupling waveguide as the one to which the first Bragg reflector is connected, e.g. using an integrated optical splitter or a fiber-optic splitter. The method may also comprise forming more than two Bragg reflectors, e.g. two Bragg reflectors that are to be in contact with the measurement volume and an additional reference Bragg reflector.

The invention also provides a single-use lab-on-a-chip device for fluid analysis. The lab-on-a-chip device comprises a refractive index sensor as described above. The lab-on-a-chip device further comprises an inlet for receiving a sample fluid, wherein the inlet is in fluid communication with the measurement volume. The lab-on-a-chip device also includes a fiber connector configured to receive an optical fiber and a coupling waveguide connecting the fiber connector to the waveguide core of the refractive index sensor.

The lab-on-a-chip device and in particular the refractive index sensor may be fabricated from cheap and easy-to-process materials, in particular polymer materials and/or polymer photoresists as described above. This allows for employing customizable and reproducible fabrication methods such as photolithography and/or injection molding. Accordingly, fabrication costs may be kept low, making the lab-on-a-chip device according to the invention suitable for single-use applications, e.g. for medical diagnostics or environmental monitoring, wherein the lab-on-a-chip device is exclusively used for testing a single sample fluid, e.g. a blood sample of a patient.

The inlet may for example be an opening, e.g. in a lower or upper substrate, and may for example be connected to the measurement chamber through a microfluidic channel. The lab-on-a-chip device may further comprise an outlet that is also in fluid communication with the measurement chamber, e.g. a second opening, such that a flow of the sample fluid through the measurement chamber may be created. The inlet and/or outlet of the lab-on-a-chip device may in particular be the inlet and outlet, respectively, of the microfluidic structure of the refractive index sensor as described above.

In a preferred embodiment, the fiber connector is a standardized fiber connector, e.g. an FC/APC or FC/PC connector. In some examples, the fiber connector may comprise additional optical elements, e.g. a lens, for coupling light into the coupling waveguide. The coupling waveguide provides an optical pathway between an external optical fiber connected to the fiber connector and the refractive index sensor, in particular the waveguide core. The coupling waveguide may be an optical fiber, preferably a single-mode optical fiber. The optical fiber may for example have an operating wavelength between 500 nm and 1650 nm, e.g. between 750 nm and 1000 nm or between 1000 nm and 1600 nm, preferably in the extended telecommunication range between 1460 nm and 1620 nm or in the range between 1250 nm and 1350 nm. A mode field diameter of the optical fiber may for example be between 3 $\mu$m and 15 $\mu$m. An input facet of the coupling waveguide may be arranged in the fiber connector and an output facet may be attached to the waveguide core, e.g. through an optical adhesive. In some embodiments, the waveguide core and the coupling waveguide may comprise the same core material and may in particular be a single continuous waveguide, i.e. may not be separated by any interface.

The lab-on-a-chip device may comprise a refractive index sensor having at least two Bragg reflectors. Preferably, the center wavelengths of each pair of Bragg reflectors differ by at least 10 nm, in some examples by at least 50 nm. At least some of the Bragg reflectors, preferably all of the Bragg reflectors may be connected to the coupling waveguide, e.g. through one or more integrated optical splitters or fiber-optic splitters.

In some embodiments, the refractive index sensor of the lab-on-a-chip device may comprise a second Bragg reflector and the coupling waveguide may comprise an integrated optical splitter or a fiber-optic splitter for connecting the fiber connector to the first Bragg reflector and to the second Bragg reflector. Both the first and second Bragg reflectors may be in contact with the measurement volume. Each of the first and second Bragg reflectors may comprise a functionalized detection layer configured to interact with a substance in the measurement volume, e.g. a substance from a sample fluid in the measurement chamber. Preferably, the first Bragg reflector comprises a first functionalized detection layer that is configured to interact with a first substance in the measurement volume and the second Bragg reflector comprises a second functionalized detection layer that is configured to interact with a second substance in the measurement volume, the second substance being different from the first substance. The first substance may e.g. be a first type of biomarker such as a specific protein and the second substance may e.g. be a specific molecule such as O2 or a second type of biomarker.

In a preferred embodiment, the refractive index sensor of the lab-on-a-chip device further comprises a third Bragg reflector, wherein the third Bragg reflector is a reference Bragg reflector that is not in contact with the measurement volume, e.g. as described above. Preferably, the coupling waveguide connects the fiber connector to the third Bragg reflector, e.g. through an integrated optical splitter or a fiber-optic splitter. In some embodiments, the refractive index sensor may comprise both the second and third Bragg reflector. In other examples the refractive index sensor may only comprise one of the second and the third Bragg reflectors.

The refractive index sensor of the lab-on-a-chip device may comprise additional elements, e.g. as described above. Furthermore, the lab-on-a-chip device may comprise additional elements, e.g. additional sensors such as a dedicated temperature sensor, e.g. a thermistor or thermocouple, or a pH sensor. The lab-on-a-chip device may in particular comprise electrodes, e.g. to measure an electrical signal in the sample fluid and/or to apply a voltage or a current to the sample fluid, for example to perform electrophoresis. Additionally or alternatively, the lab-on-a-chip device may comprise one or more optical view ports, e.g. in the lower or upper substrate, to perform optical measurements of the sample fluid, e.g. microscopy, fluorescence and/or transmission measurements. Preferably, the lower and/or upper substrate are transparent in the visible range. In some examples, the lab-on-a-chip device may further comprise a frame, e.g. to mount the refractive index sensor, and/or a sealing structure, e.g. to cover the second polymer material around an edge of the lab-on-a-chip device. The lab-on-a-chip device may further comprise a main substrate, to which the refractive index sensor may be attached. Preferably, the lower and/or upper substrates of the refractive index sensor form the main substrate and/or frame.

LIST OF FIGURES

In the following, a detailed description of the invention and exemplary embodiments thereof is given with reference to the figures. The figures show schematic illustrations of

Fig. 1a: a refractive index sensor according to an exemplary embodiment of the invention in top view;

Fig. 1b: a cross section of the refractive index sensor of Fig. 1a in side view;

Fig. 2a: reflectivity spectra of a Bragg reflector according to an exemplary embodiment of the invention;

Fig. 2b: a center wavelength of a Bragg reflector as a function of a refractive index of a sample fluid in accordance with an exemplary embodiment of the invention;

Fig. 3a: a refractive index sensor comprising a microfluidic structure according to an exemplary embodiment of the invention in top view;

Fig. 3b: a cross section of the refractive index sensor of Fig. 3a in side view;

Fig. 4a: a time trace of the center wavelength measured experimentally using a refractive index sensor according to an exemplary embodiment of the invention;

Fig. 4b: the dependence of the center wavelength on the refractive index of a sample fluid measured experimentally with a refractive index sensor in accordance with an exemplary embodiment of the invention;

Fig. 5: a flow diagram of a method of manufacturing a refractive index sensor according to an exemplary embodiment of the invention; and

Fig. 6: a lab-on-a-chip device according to an exemplary embodiment of the invention in top view.

DESCRIPTION OF THE PREFERRED EMBODIMENTS

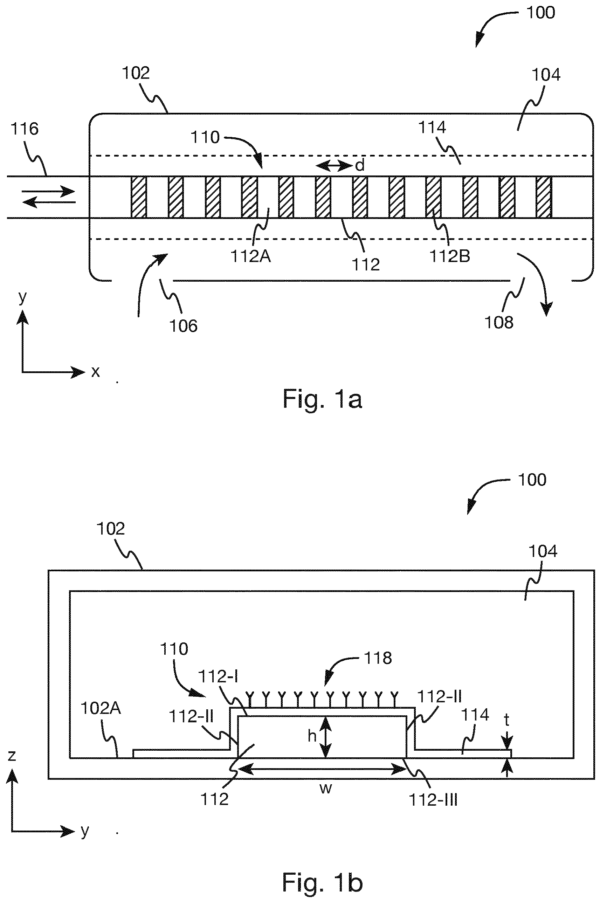

Figs. 1a and 1b depict schematic illustrations of a refractive index sensor 100 according to an exemplary embodiment of the invention. Fig. 1a shows the refractive index sensor 100 in top view and Fig. 1b shows the refractive index sensor 100 in a cross-sectional side view.

The refractive index sensor 100 comprises a measurement chamber 102, which encloses a measurement volume 104. The measurement chamber 102 is made of plastic, preferably a cyclic olefin copolymer such as TOPAS® and/or a polymer photoresist such as EpoClad®. The measurement volume 104 may for example be between 0.001 mm$^3$ and 1 mm$^3$, e.g. between 0.1 mm$^3$ and 0.5 mm$^3$. The measurement chamber 102 comprises an inlet 106 and an outlet 108, which may e.g. be openings in a sidewall of the measurement chamber 102. The inlet 106 and the outlet 108 may be connected to microfluidic channels (not shown) and/or to an input port and to an output port (not shown), respectively, which is configured to receive a fluid source, e.g. a syringe.

The refractive index sensor 100 further comprises a waveguide core 110, which is arranged on an inner bottom surface 102A of the measurement chamber 102. The waveguide core 110 consists of a first polymer material, preferably a polymer photoresist such as EpoCore®. The first polymer material is chosen to have a larger refractive index than the bottom surface 102A such that total internal reflection can occur at the interface between the waveguide core 110 and the measurement chamber 102. In the example of Figs. 1a and 1b, an optical axis of the waveguide core 110 is aligned with the x direction.

Within the waveguide core 110, a first Bragg reflector 112 is formed, which exhibits a periodic refractive index pattern with a period d. The refractive index pattern comprises alternating regions of low refractive index 112A and regions of high refractive index 112B. The refractive index may for example vary sinusoidally along the first Bragg reflector 112. The regions 112A and 112B may extend over the entire cross section of the waveguide core 110 perpendicular to the optical axis, i.e. in the y-z plane of Fig. 1b. The first Bragg reflector 112 may extend over the entire length of the waveguide core 110 or a part thereof, e.g. almost the entire length of the waveguide core 110 as shown in Fig. 1a.

The waveguide core 110 has a height h and a width w, wherein the height h is between 0.2 $\mu$m and 2.0 $\mu$m, e.g. between 0.6 $\mu$m and 1.0 $\mu$m. The width w may for example be between 2 $\mu$m and 20 $\mu$m, e.g. 10 $\mu$m. In the example of Figs. 1a and 1b, the waveguide core 110 has a rectangular cross section with two pairs of opposing parallel surfaces, wherein the bottom surface is in contact with the measurement chamber 102, while the upper surface and two side surfaces are exposed to the measurement volume 104. In other examples, opposing surfaces may be at an angle relative to each other and/or some or all of the surfaces of the waveguide core 110 may be curved, e.g. convex or concave surfaces.

A high-refractive index coating 114 is deposited on the first Bragg reflector 112. The high-refractive index coating 114 covers at least the upper surface 112-I and the side surfaces 112-II of the first Bragg reflector 112, whereas the bottom surface 112-III of the first Bragg reflector is in contact with the bottom surface 102A of the measurement chamber 102. In addition, the high-refractive index coating 114 may also cover at least a part of the bottom surface 102A of the measurement chamber 102 as shown in Fig. 1b. This may further increase the fraction of an optical mode extending into the measurement volume 104. In Fig. 1a, the edges of the high-refractive index coating 114 are shown as dashed lines.

The high-refractive index coating 114 has a refractive index that is at least 0.3 larger than the spatially averaged refractive index of the first Bragg reflector, i.e. the refractive index averaged over the low- and high-refractive index regions 112A, 112B. The high-refractive index coating 114 may for example comprise TiO$_2$, which has a refractive index of about n = 2.1 at 1550 nm as compared to the refractive index of EpoCore® of about n = 1.6. The high-refractive index coating 114 has a thickness t between 50 nm and 400 nm, e.g. between 150 and 250 nm. Preferably, the thickness of the high-refractive index coating varies by less than 10 nm throughout its entire extent. The thickness of the high-refractive index coating 114 may be adapted to increase the sensitivity of the refractive index sensor 100 and may e.g. be optimized for a certain mode of the waveguide core 110.

The refractive index sensor 100 further comprises a coupling waveguide 116 that is connected to the waveguide core 110 so as to provide an optical path from the coupling waveguide 116 to waveguide core 110, i.e. such that an incoming mode in the coupling waveguide 116 is transmitted at least in part to a mode of the waveguide core 110 and a mode reflected at the Bragg reflector 112 is transmitted at least in part back into a mode of the coupling waveguide 116. The coupling waveguide 116 may comprise the same core material as the waveguide core 110 and/or may have the same dimensions as the waveguide core 110, e.g. to form a single continuous waveguide with the waveguide core 110 as shown in Fig. 1a. In other examples, the coupling waveguide 116 may comprise a different core material than the waveguide core 110 and/or may have different dimensions than the waveguide core 110. The coupling waveguide 116 may for example be a silica-based optical fiber, which may e.g. have a core diameter different from the height h of the waveguide core 110.

The high-refractive index coating 114 further comprises a functionalized detection layer 118 that is configured to interact with a substance from a sample fluid (not shown) contained within the measurement chamber 102, e.g. through formation of chemical bonds, undergoing a chemical reaction with the substance and/or adsorbing or absorbing the substance. In the example of Fig. 1b, the functionalized detection layer 118 comprises a plurality of antibodies that are attached to the high-refractive index layer 114 and may e.g. be configured to bind to a specific protein, e.g. C-reactive proteins. The functionalized detection layer 118 may e.g. be arranged adjacent to the upper surface 112-I as in Fig. 1b, but may also be arranged adjacent to the side surfaces 112-II and/or on the entire high-refractive index layer 114. Additionally or alternatively, the high-refractive index layer 114 itself may also act as a functionalized detection layer. In one example, the high-refractive index layer 114 may comprise zinc oxide, which may interact with CO in the measurement volume 104.

The refractive index sensor 100 may be used to probe a sample fluid (not shown) provided to the measurement chamber 102. An optical mode propagating in the waveguide core 110 may partially extend into the measurement volume 104 in the vicinity of the waveguide core 110. Thereby, the optical mode may interact with the sample fluid, which may lead to a modification of the modal effective refractive index $n_{eff}$ of the first Bragg reflector 112 and may thus shift the center wavelength $\lambda_B$ of the first Bragg reflector 112 (see above).

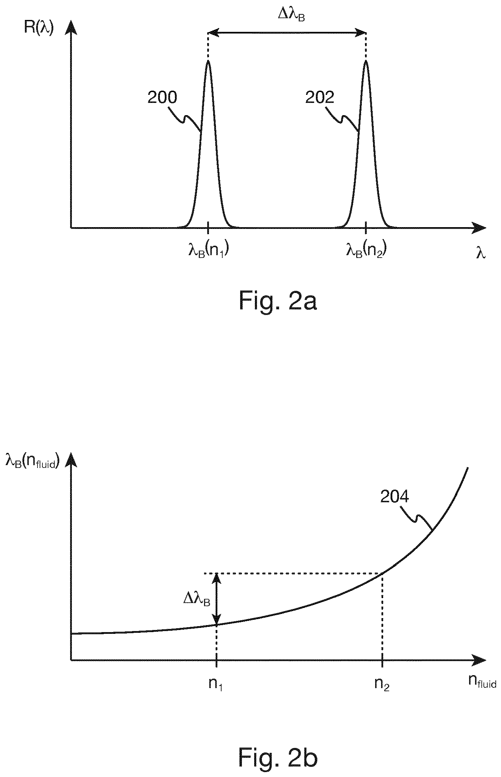

This is illustrated in Figs. 2a and 2b. Fig. 2a depicts a schematic illustration of exemplary reflectivity spectra 200, 202 of a Bragg reflector, e.g. of the first Bragg reflector 112 of the refractive index sensor 100. Fig. 2b shows a schematic evolution 204 of the center wavelength $\lambda_B$ of the first Bragg reflector 112 as a function of the refractive index $n_{fluid}$ of a sample fluid filling the measurement chamber 102.

The reflectivity spectra 200, 202 may for example be obtained by coupling monochromatic light with a variable wavelength $\lambda$ into the coupling waveguide 116 and measuring the fraction of light R that is reflected back by the first Bragg reflector 112 through the coupling waveguide 116 as a function of the wavelength $\lambda$. Alternatively, a broadband light source may be used and the intensity of the reflected light may be measured in a spatially resolved way, e.g. using a spectrometer.

The reflectivity spectrum 200 may for example have been recorded with a sample fluid having a refractive index $n_1$ in the measurement chamber 102. Due to the periodic structure of the first Bragg reflector 112, the reflectivity spectrum 200 exhibits a pronounced peak at the center wavelength $\lambda_B(n_1)$. The reflectivity spectrum 202 may for example have been recorded with a sample fluid having a refractive index $n_2 > n_1$ in the measurement chamber 102. Compared to the reflectivity spectrum 200, the reflectivity spectrum 202 is red-shifted towards longer wavelengths by $\Delta\lambda_B$ and has a maximum at the center wavelength $\lambda_B(n_2) > \lambda_B(n_1)$.

The center wavelength may scale non-linearly with the refractive index $n_{fluid}$ of a sample fluid, in particular for higher-order transverse modes. The center wavelength may strongly increase with increasing $n_{fluid}$, e.g. approximately exponentially as shown in Fig. 2b, until $n_{fluid}$ approaches the refractive index of the waveguide core 110, at which point the optical modes are no longer confined. The center wavelength may thus be highly sensitive to changes in $n_{fluid}$, providing a precise method to determine $n_{fluid}$ and/or other properties of the sample fluid, e.g. using a corresponding calibration curve.

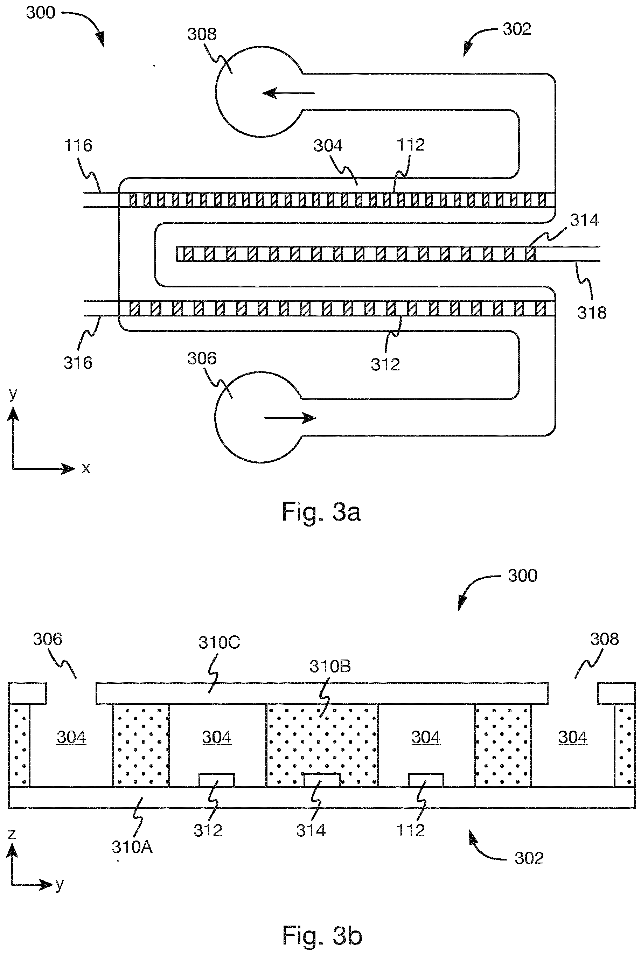

Figs. 3a and 3b depict schematic illustrations of a refractive index sensor 300 according to another exemplary embodiment of the invention. Fig. 3a shows the refractive index sensor 300 in top view and Fig. 3b shows the refractive index sensor 300 in a cross-sectional side view.

The refractive index sensor 300 is similar to the refractive index sensor 100 and also comprises a first Bragg reflector 112 that is coupled to a first coupling waveguide 116. The refractive index sensor 300 further comprises a microfluidic structure 302 and the measurement volume surrounding the first Bragg reflector 112 is a channel 304 of the microfluidic structure 302. In the example of Fig. 3a, the first Bragg reflector 112 is arranged and configured such that it extends along a longitudinal direction of the channel 304, along which a fluid (not shown) flows. The microfluidic structure 302 further comprises an inlet 306 and an outlet 308, which are in fluid communication via the channel 304. In addition, the microfluidic structure 302 may comprise other elements, for example additional channels, a reservoir, a valve, a pump, additional inlets and/or additional outlets (not shown).

The microfluidic structure 302 is formed in a second polymer material layer 310B sandwiched between a lower substrate 310A and an upper substrate 310C, i.e. a lower surface of the second polymer material layer 310B is in contact with the lower substrate 310A and an upper surface of the second polymer material layer 310B is in contact with the upper substrate 310C. By patterning the layer 310B, i.e. removing portions thereof, closed volumes such as the channel 304 may be formed. The first Bragg reflector 112 is arranged on the lower substrate 310A such that a bottom surface of the first Bragg reflector 112 is in contact with the lower substrate 310A. The inlet 306 and the outlet 308 are openings formed in the upper substrate 310C, providing a connection between the microfluidic structure 302 and the exterior of the refractive index sensor 300. The substrates 310A, 310C are made of plastic, preferably a cyclic olefin copolymer such as TOPAS®. The second polymer material is a polymer photoresist such as EpoClad® or a cyclo-olefin copolymer. In particular, the second polymer material exhibits a lower refractive index than the first polymer material of the waveguide core 110 and the first Bragg reflector 112, e.g. EpoCore®. Thereby, the second polymer material may act as a cladding layer for the first polymer material to form waveguides. The aforementioned materials are hemocompatible such that the refractive index sensor 300 may e.g. be used for analyzing blood samples.

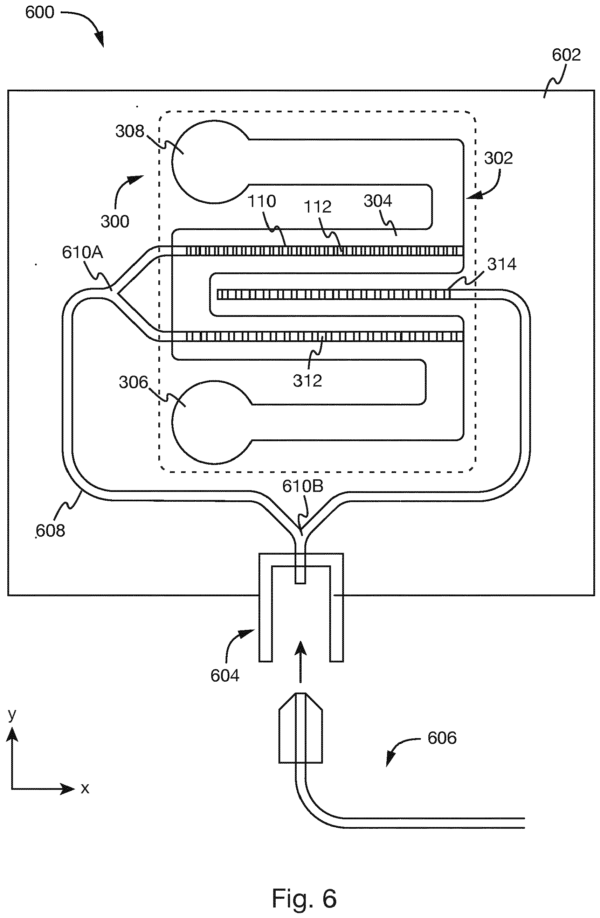

The refractive index sensor 300 further comprises a second Bragg reflector 312 in a second waveguide core, which is coupled to a second coupling waveguide 316. The first and second coupling waveguides 116, 316 may be coupled to a common coupling waveguide by an integrated optical splitter or a fiber-optic splitter (not shown), e.g. as described below with reference to Fig. 6. The second Bragg reflector 312 is similar to the first Bragg reflector 112. In particular, the second Bragg reflector 312 also consists of the first polymer material, has the same or similar dimensions as the first Bragg reflector 112 and is also arranged on the lower substrate 310A as shown in Fig. 3b, e.g. in a different portion of the channel 304. The period d of the refractive index pattern, however, is different for the first and second Bragg reflectors 112, 312 such that their center wavelengths differ. In one example, the period of the first Bragg reflector 112 is chosen such that its center wavelength is at 1510 nm, whereas the period of the second Bragg reflector 312 is chosen to be larger such that its center wavelength is at 1560 nm. Alternatively, the first Bragg reflector 112 may e.g. be designed to have a center wavelength around 1280 nm and the second Bragg reflector 312 may e.g. be designed to have a center wavelength around 1330 nm.

The refractive index sensor 300 further comprises a reference Bragg reflector 314 in a third waveguide core, which is coupled to a third coupling waveguide 318. The reference Bragg reflector 314 is arranged outside of the channel 304 such that the reference Bragg reflector 314 is not in contact with the measurement volume or any other part of the microfluidic structure 302. Instead, the reference Bragg reflector 314 is embedded in the second polymer material layer 310B, e.g. at an interface to the lower substrate 310A as shown in Fig. 3b. In other examples, the reference Bragg reflector 314 may e.g. be fully enclosed by the second polymer material layer 310B or may be embedded in the lower or upper substrate 310A, 310C. The third waveguide core is also made of the first polymer material such that all waveguide cores and Bragg reflectors 112, 312, 314, respectively, can be formed in a single process.

Since the reference Bragg reflector 314 is not in contact with the sample fluid, the reference Bragg reflector 314 may be used as a reference to track drifts of the center wavelength due to changes in temperature, humidity or other ambient parameters and to calibrate results obtained from first or second Bragg reflector 112, 312 accordingly.

Figs. 4a and 4b show experimental data obtained with a refractive index sensor according to the invention. Fig. 4a depicts a time trace 400 of the center wavelength of a Bragg reflector when supplying sample fluids with different refractive indices to the measurement volume. Between measurements of different sample fluids, the refractive index sensor is purged and dried using isopropanol and a subsequent nitrogen stream. The time trace 402 on the right-hand side of Fig. 4a is an enlarged view of the time trace 400 for the last two sample fluids.

Fig. 4b shows the evolution 404 of the center wavelength of the Bragg reflector as a function of the refractive index of the sample fluid obtained from the measurement of Fig. 4a. The center wavelength depends strongly on the refractive index of the sample fluid and can be approximated very well by an exponential fit. For comparison, a second data set 406 obtained with a refractive index sensor without a high-refractive index coating is also shown in Fig. 4b. While the center wavelength also scales exponentially with the refractive index of the sample fluid in this case, the absolute shift is about a factor of 2.5 to 5 smaller than for the refractive index sensor with a high-refractive index coating.

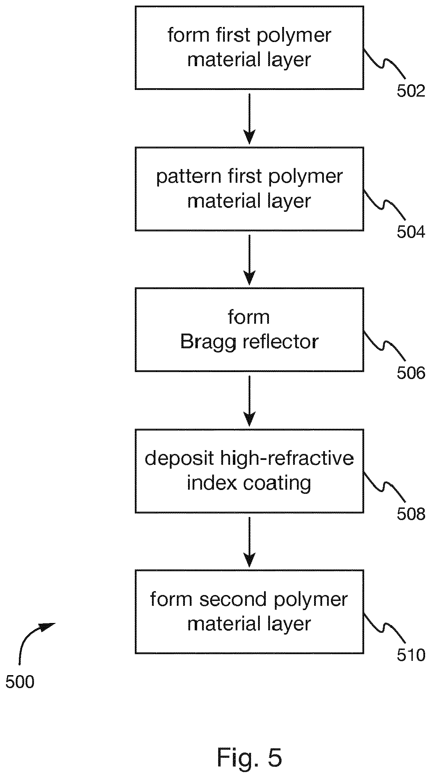

Fig. 5 depicts a flow diagram of a method 500 of manufacturing a refractive index sensor according to an exemplary embodiment of the invention. The method is described in the following using the refractive index sensor 300 as an example. This is, however, not intended to be limiting and the method 500 may be used to manufacture other refractive index sensors according to the invention, e.g. the refractive index sensor 100. Furthermore, the method 500 is not limited to the order of execution shown in the flow diagram of Fig. 5. As far as technically feasible, steps may be executed in a different order and may also be executed simultaneously at least in part.

The method 500 comprises, at step 502, forming a layer of a first polymer material on the lower substrate 310A. As described above, the lower substrate 310A may for example consist of a plastic such as TOPAS®. The lower substrate 310 may have a planar upper surface and a thickness between 0.5 mm and 5 mm, e.g. 1 mm. The first polymer material may in particular be a polymer photoresist such as EpoCore®. The first polymer material may for example be provided in a liquid or viscous state and may be distributed over the lower substrate 310A as a homogeneous layer by spin coating.

The first polymer material layer is formed with a thickness between 0.2 $\mu$m and 2.0 $\mu$m, e.g. a thickness between 0.6 $\mu$m and 1.0 $\mu$m. The thickness may e.g. be controlled via parameters of the spin coating process, in particular a rotation speed and a duration. The rotation speed may for example be between 2 000 rpm and 10 000 rpm and the duration may for example be between 30 s and 60 s.

The method 500 further comprises, at step 504, patterning the first polymer material layer to form the waveguide core 110. The first polymer material layer may in particular be patterned by photolithography, e.g. by UV light illumination with an amplitude mask and subsequent removal of exposed or non-exposed portions using a solvent or developer. The first polymer material layer may e.g. be illuminated at a wavelength between 300 nm and 400 nm with a maximum exposure does between 100 mJ/cm$^2$ and 300 mJ/cm$^2$. The first polymer material layer is patterned such that the waveguide core 110 has an exposed upper surface and two exposed side surfaces as detailed above with reference to Figs. 1a, 1b and Figs. 3a, 3b. Step 504 may also comprise adjusting the height h of the waveguide core 110, e.g. by chemical etching or mechanical polishing. In step 504, additional structures may be formed in the first polymer material layer, e.g. waveguide cores for the Bragg reflectors 312 and 314 and/or the coupling waveguides 116, 316, 318.

The method 500 further comprises, at step 506, forming the first Bragg reflector 112 in the waveguide core 110, e.g. by imprinting a periodically varying refractive index pattern into the first polymer material layer. The refractive index pattern may for example be imprinted by UV light illumination, in particular using a periodic interference pattern, e.g. a sinusoidally varying intensity distribution. The UV light may for example have a wavelength between 200 nm and 300 nm. For this, the waveguide core 110 may e.g. be illuminated by intersecting UV laser beams or a single UV laser beam, onto which an appropriate phase pattern is imprinted by a phase mask. In one example, a pulsed UV laser is used having a pulse fluence between 5 mJ/cm$^2$ and 20 mJ/cm$^2$ at the waveguide core 110. The number of pulses may e.g. be between 10 and 3000 and may be adjusted based on the desired modulation of the refractive index. For this, a reflectivity of the Bragg reflector 112 may be monitored in real-time. Step 506 may also comprise forming additional Bragg reflectors, e.g. the Bragg reflectors 312 and 314.

The method 500 further comprises, at step 508, coating the first Bragg reflector 112 with the high-refractive index coating 114 having a refractive index that is at least 0.3 larger than the spatially averaged refractive index of the first Bragg reflector 112. The high-refractive index coating 114 may for example be deposited by chemical or physical vapor deposition, e.g. by sputter deposition, for example reactive sputtering of $TiO_2$. The high-refractive index coating 114 is deposited at least on the upper surface 112-I and the side surfaces 112-II as described above with reference to Figs. 1a and 1b. The high-refractive index coating 114 is deposited up to a thickness t between 50 nm and 400 nm. During the sputter deposition, an orientation of the first Bragg reflector 112 relative to the sputter source may be modified to achieve a homogeneous thickness t. Step 508 may further comprise coating the second Bragg reflector 312 with a high-refractive index coating 114.

Step 508 may also comprise forming one or more functionalized detection layers, e.g. on the high-reflective index coating 114 of the Bragg reflectors 112 and/or 312. This may comprise depositing an additional layer on the high-reflective index coating 114 that is configured to interact with a substance as described above. In one example, the high-reflective index coating 114 may be exposed to a solution containing antibodies that are configured to bind to the high-reflective index coating 114, thereby functionalizing the high-reflective index coating 114.

The method 500 may further comprise, at step 510, forming the layer 310B of the second polymer material, which may in particular be a polymer photoresist such as EpoClad ® or alternatively a structured cyclo-olefin copolymer. The second polymer material layer 310B may be formed similar to the first polymer material layer, e.g. by spin coating. A thickness of the second polymer material layer 310B may for example be between 5 μm and 500 μm. Step 510 may further comprise patterning the second polymer material layer 310B to form the microfluidic structure 302. The second polymer material layer 310B may in particular be patterned using photolithography, e.g. similar to the patterning of the first polymer material layer in step 504. This allows for a flexible design of the microfluidic structure 302 by using an appropriate mask as well as for a precise alignment between the microfluidic structure 302 and the Bragg reflectors 114, 312, and 314. Prior to forming the second polymer material layer 310B, additional elements may be arranged in and/or on the lower substrate 310A, e.g. further integrated optical waveguides or optical fibers servings as coupling waveguides 116, 316, 318. This may comprise connecting the coupling waveguides 116, 316, 318 to the respective waveguide cores, e.g. using an optical adhesive.

The method 500 may comprise additional steps, for example bonding the upper substrate 310C to the second polymer material layer 310B or forming the inlet 306 and the outlet 308 in the upper substrate 310C, e.g. by laser ablation or milling. In some examples, the method 500 may further comprise integrating the refractive index sensor 300 into a lab-on-a-chip device, e.g. the lab-on-a-chip-device 600 of Fig. 6.

Fig. 6 shows a schematic illustration of a lab-on-a-chip device 600 according to an exemplary embodiment of the invention in top view. The lab-on-a-chip device 600 comprises a refractive index sensor according to the invention, in this example the refractive index sensor 300 of Figs. 3a and 3b with the microfluidic structure 302 having an inlet 306 and an outlet 308 that are in fluid communication through the channel 304. The refractive index sensor 300 is surrounded by a frame 602, which may for example also be formed of the lower substrate 310A, the upper substrate 310C and/or the second polymer material layer 310B similar to the microfluidic structure 302, e.g. such that the frame 602 and the microfluidic structure 302 may be fabricated simultaneously.

The lab-on-a-chip device 600 further comprises a fiber connector 604 that is configured to receive an optical fiber 606. The fiber connector 604 is a standardized fiber connector, e.g. an FC/APC or FC/PC connector. The fiber connector 604 is configured to couple the optical fiber 606 with a coupling waveguide 608, which may e.g. be a silica-based optical fiber or a waveguide similar to the waveguide core 110, i.e. a polymer-based waveguide. The coupling waveguide 608 is arranged in the frame 602, e.g. on the lower substrate 310A and/or in the second polymer material layer 310B similar to the reference Bragg reflector 314.

The coupling waveguide 608 comprises two integrated optical splitters or fiber-optic splitters 610A, 610B. The fiber-optic splitters 610A, 610B are configured to split incoming light propagating from the fiber connector 602 along the coupling waveguide 608 into different arms of the coupling waveguide 608 and to collect reflected light from the different arms at the fiber connector 604. This allows for using a single fiber connector 604 to address multiple Bragg reflectors, in this case the Bragg reflectors 112, 312 and 314. The periods d of the Bragg reflectors 112, 312 and 314 may be chosen such that the center wavelengths of the Bragg reflectors 112, 312 and 314 differ by at least 10 nm, preferably by at least 50 nm such that light reflected from the Bragg reflectors 112, 312 and 314 may easily be distinguished even when the center wavelength is shifted by a sample fluid.

The lab-on-a-chip device 600 may further comprise other elements, e.g. additional sensors (not shown). The lab-on-a-chip device 600 may also include electrodes (not shown), for example a pair of electrodes in contact with the channel 304 to measure an electrical signal in the sample fluid (not shown) and/or to apply a voltage or current to the sample fluid. The lab-on-a-chip device 600 may also comprise one or more optical view ports, e.g. in the lower or upper substrate 310A, 310C, to perform optical measurements of the sample fluid in the microfluidic structure 302. The lower and/or upper substrate 310A, 310C or at least a part thereof may e.g. be transparent in the visible range.

The lab-on-a-chip device 600 may further comprise a measuring device (not shown) or may be combined with a measuring device provided as an independent unit. The measuring device may comprise a light source, in particular a broadband light source or a tunable monochromatic light source. Light emitted by the light source may be coupled into the optical fiber 606 and thereby into the waveguide cores of the Bragg reflectors 112, 312, 314. Preferably, light emitted by the light source is coupled into one or more higher-order modes of the waveguide cores. The broadband light source may emit light in a wavelength range containing the center wavelengths of each of the Bragg reflectors 112, 312, 314. The monochromatic light source may be tunable over a wavelength range containing the center wavelengths of each of the Bragg reflectors 112, 312, 314.

The measuring device may further comprise a detector that is configured to measure a light intensity, e.g. a photodiode. The measuring device may in particular comprise an optical spectrometer that is configured to measure a spectrum of light, e.g. a spectrometer having a diffraction grating. The measuring device may comprise an optical splitter, e.g. a fiber-optic splitter in the optical fiber 606 or a beam splitter and/or an optical isolator, e.g. for directing reflected light entering the optical fiber 606 from the fiber connector 604 towards the detector and for directing light emitted by the light source towards the fiber connector 604.

The measuring device may further comprise a controller, which may be implemented in hardware, software or a combination thereof. The controller may for example comprise a microcontroller including a processor and a storage medium storing instructions to be executed by the processor. The controller may be configured to perform measurements by controlling the light source and the detector. The controller may for example adjust an intensity and/or wavelength emitted by the light source and may read out a measurement signal from the detector, e.g. a measurement signal quantifying a light intensity on the detector.

In one example, the light source may be a monochromatic light source and the detector may be a photodiode. The controller may tune the wavelength of the light source and may determine the light intensity on the photodiode as a function of the wavelength to record a reflectivity spectrum of at least one of the Bragg reflectors 112, 312, 314. In another example, the light source may be a broadband light source and the detector may be an optical spectrometer. The controller may tune a detection wavelength of the spectrometer to record the reflectivity spectrum of at least one of the Bragg reflectors 112, 312, 314.

The controller may further be configured to determine a center wavelength of at least one of the Bragg reflectors 112, 312, 314. The controller may for example determine the center wavelength from a measured reflectivity spectrum, e.g. by fitting the reflectivity spectrum with a fit function. The controller may also be configured to determine a modal effective refractive index from the center wavelength. The controller may in particular be configured to determine the refractive index $n_{fluid}$ of a sample fluid from the center wavelength, e.g. using a predetermined calibration curve as shown in Fig. 4b.

The controller may also be configured to determine other properties of the sample fluid, e.g. a concentration of a substance. The controller may for example determine the concentration by comparing the center wavelengths of the first and second Bragg reflectors 112, 312. The first Bragg reflector 112 may e.g. have functionalized detection layer configured to interact with the substance to obtain a concentration-dependent center wavelength shift, whereas the second Bragg reflector 312 may not have a functionalized detection layer to obtain the center wavelength shift caused by the intrinsic refractive index $n_{fluid}$ of the sample fluid. The concentration may then e.g. be extracted from the difference in the center wavelength shifts using a predetermined calibration curve.

The controller may further be configured to perform an ambient condition calibration, e.g. by determining a center wavelength of the reference Bragg sensor 314. The controller may be configured to adjust parameters such as a center wavelength shift, the refractive index $n_{fluid}$ and/or a substance concentration based on the center wavelength of the reference Bragg sensor 314. The controller may also be configured to determine an ambient condition parameter, e.g. a temperature or humidity, based on the center wavelength of the reference Bragg sensor 314.

The embodiments of the present invention disclosed herein only constitute specific examples for illustration purposes. The present invention can be implemented in various ways and with many modifications without altering the underlying basic properties. Therefore, the present invention is only defined by the claims as stated below.

LIST OF REFERENCE SIGNS

| 100 - | refractive index sensor |
|---|---|
| 102 - | measurement chamber |
| 104 - | measurement volume |
| 106 - | inlet |
| 108 - | outlet |
| 110 - | waveguide core |
| 112 - | first Bragg reflector |
| 112A - | low-refractive index region |
| 112B - | high-refractive index region |
| 112-I - | upper surface of the first Bragg reflector |
| 112-II - | side surfaces of the first Bragg reflector |
| 114 - | high-refractive index coating |
| 116 - | coupling waveguide |
| 118 - | functionalized detection layer |

| 200 - | reflectivity spectrum of a Bragg reflector for a sample fluid with refractive index $n_1$ |
|---|---|
| 202 - | reflectivity spectrum of a Bragg reflector for a sample fluid with refractive index $n_2$ |
| 204 - | center wavelength of a Bragg reflector as a function of the fluid refractive index $n_{fluid}$ |

| 300 - | refractive index sensor |
|---|---|
| 302 - | microfluidic structure |
| 304 - | channel |
| 306 - | inlet |
| 308 - | outlet |
| 310A - | lower substrate |
| 310B - | second polymer material layer |
| 310C - | upper substrate |
| 312 - | second Bragg reflector |
| 314 - | reference Bragg reflector |
| 316 - | coupling waveguide for second Bragg reflectors |
| 318 - | coupling waveguide for reference Bragg reflector |

| 400 - | experimentally measured time trace of the center wavelength of a Bragg reflector |
|---|---|
| 402 - | enlarged portion of the time trace 400 |
| 404 - | experimentally measured shift of the center wavelength as a function of $n_{fluid}$ for a Bragg reflector with high-refractive index coating |
| 406 - | experimentally measured shift of the center wavelength as a function of $n_{fluid}$ for a Bragg reflector without high-refractive index coating |

| 500 - | method of manufacturing a refractive index sensor |
|---|---|
| 502 - | step of forming the first polymer material layer |
| 504 - | step of patterning the first polymer material layer |
| 506 - | step of forming the first Bragg reflector |
| 508 - | step of depositing the high-reflective index coating |
| 510 - | step of forming the second polymer material layer |

| 600 - | lab-on-a-chip device |
|---|---|
| 602 - | frame |
| 604 - | fiber connector |
| 606 - | optical fiber |
| 608 - | coupling waveguide |
| 610A, 610B - | integrated optical splitter or fiber-optic splitter |

**Claims**

1. A refractive index sensor (100) comprising:

   a measurement chamber (102) enclosing a measurement volume (104);
   a waveguide core (110) comprising a first polymer material, wherein the waveguide core (110) is arranged in the measurement chamber (102) and wherein at least an upper surface and two side surfaces of the waveguide core (110) are in contact with the measurement volume (104); and
   a first Bragg reflector (112) formed in the waveguide core (110), the first Bragg reflector (112) having a refractive index that varies periodically along an optical axis of the waveguide core (110),

   wherein:

   at least the upper surface (112-I) and the side surfaces (112-II) of the first Bragg reflector (112) are coated with a high-refractive index coating (114) having a refractive index that is at least 0.3 larger than the spatially averaged refractive index of the first Bragg reflector (112);
   the high-refractive index coating (114) has a thickness (t) between 50 nm and 400 nm; and
   the waveguide core (110) has a height (h) between 0.2 $\mu$m and 2.0 $\mu$m in a direction perpendicular to the optical axis.

2. The refractive index sensor (100) of claim 1, wherein the waveguide core (110) is arranged on an inner surface (102A) of the measurement chamber (102).

3. The refractive index sensor (100) of claim 1 or 2, wherein the high-refractive index coating (114) comprises or consists of one or more of $TiO_2$, zinc oxide, tantalum tin oxide, tantalum pentoxide, zirconium dioxide, silicon, and amorphous silicon.

**4.** The refractive index sensor (100) of any one of the preceding claims, wherein the high-refractive index coating (114) comprises a functionalized detection layer (118) that is configured to interact with a substance from a sample fluid in the measurement volume (104).

**5.** The refractive index sensor (300) of any one of the preceding claims, further comprising a microfluidic structure (302) with an inlet (306) and an outlet (308), wherein the measurement volume (104) is a channel (304) of the microfluidic structure (302), wherein the optical axis of the waveguide core (110) is preferably aligned with a longitudinal axis of the channel (304).

**6.** The refractive index sensor (300) of any one of the preceding claims, wherein the measurement chamber (102) is formed by a patterned layer (310B) of a second polymer material arranged between a lower substrate (310A) and an upper substrate (310C).

**7.** The refractive index sensor (300) of any one of the preceding claims, further comprising a second Bragg reflector (312, 314), wherein a center wavelength of the second Bragg reflector (312, 314) differs by at least 10 nm, preferably by at least 50 nm from a center wavelength of the first Bragg reflector (112), wherein the second Bragg reflector is preferably a reference Bragg reflector (314) that is not in contact with the measurement volume (104).

**8.** A method (500) of manufacturing a refractive index sensor (100), the method comprising:

forming a layer of a first polymer material on a lower substrate (310A), the layer having a thickness between 0.2 $\mu$m and 2.0 $\mu$m;
patterning the first polymer material layer to form a waveguide core (110) having an exposed upper surface and two exposed side surfaces;
forming a first Bragg reflector (112) in the waveguide core (110), the first Bragg reflector (112) having a refractive index that varies periodically along an optical axis of the waveguide core (110), and
coating the upper surface (112-I) and the side surfaces (112-II) of the first Bragg reflector (112) with a high-refractive index coating (114) having a refractive index that is at least 0.3 larger than the spatially averaged refractive index of the first Bragg reflector (112), wherein the high-refractive index coating has a thickness (t) between 50 nm and 400 nm.

**9.** The method (500) of claim 8, further comprising forming a layer (310B) of a second polymer material on the lower substrate (310A) and patterning the second polymer material layer (310B) to form a microfluidic structure (302), wherein at least a part of the first Bragg reflector (112) is arranged in a channel (304) of the microfluidic structure (302), wherein the optical axis of the waveguide core (110) is preferably aligned with a longitudinal direction of the channel (304).

**10.** The method (500) of any one of claims 8 or 9, wherein the high-refractive index (114) coating comprises or consists of one or more of TiO$_2$, zinc oxide, tantalum tin oxide, tantalum pentoxide, zirconium dioxide, silicon, and amorphous silicon, and/or wherein the method further comprises forming a functionalized detection layer (118) in and/or on the high-refractive index coating (114), the functionalized detection layer being configured to interact with a substance from a sample fluid.

**11.** The method (500) of any one of claims 8 to 10, wherein the first polymer material is a polymer photoresist and is patterned by photolithography, and/or wherein the first Bragg reflector (114) is formed by exposing the first polymer material to ultraviolet light, and/or further comprising connecting a coupling waveguide (116) to the waveguide core (110), and/or further comprising forming a second Bragg reflector (312, 314), wherein a center wavelength of the second Bragg reflector (312, 314) differs by at least 10 nm, preferably by at least 50 nm from a center wavelength of the first Bragg reflector (112).

**12.** A single-use lab-on-a-chip device (600) for fluid analysis comprising:

a refractive index sensor (100, 300) according to any one of claims 1 to 9;
an inlet (106, 306) for receiving a sample fluid, wherein the inlet (106, 306) is in fluid communication with the measurement volume (104);
a fiber connector (604) configured to receive an optical fiber (606); and
a coupling waveguide (608) connecting the fiber connector (604) to the waveguide core (110) of the refractive index sensor (100, 300).

**13.** The lab-on-a-chip device (600) of claim 12, wherein

the refractive index sensor (300) comprises a second Bragg reflector (312, 314), the center wavelength of the second Bragg reflector (312, 314) differing by at least 10 nm, preferably by at least 50 nm from the center wavelength of the first Bragg reflector (112); and
the coupling waveguide (608) comprises an integrated optical splitter or a fiber-optic splitter (610A, 610B) for connecting the fiber connector (604) to the first Bragg reflector (112) and to the second Bragg reflector (312, 314).

14. The lab-on-a-chip device (600) of claim 13, wherein

the first Bragg reflector (112) comprises a first functionalized detection layer (118) that is configured to interact with a first substance from a sample fluid in the measurement volume (104); and
the second Bragg reflector (312) comprises a second functionalized detection layer that is configured to interact with a second substance from the sample fluid in the measurement volume (104), the second substance being different from the first substance.

15. The lab-on-a-chip device (600) of any one of claims 12 to 14, wherein

the refractive index sensor (300) further comprises a third Bragg reflector (314), the third Bragg reflector (314) being a reference Bragg reflector that is not in contact with the measurement volume (104), and
the coupling waveguide (608) connects the fiber connector (604) to the third Bragg reflector (314).

Fig. 1a

Fig. 1b

Fig. 2a

Fig. 2b

Fig. 3a

Fig. 3b

Fig. 4a

Fig. 4b

form first polymer
material layer

502

pattern first polymer
material layer

504

form
Bragg reflector

506

deposit high-refractive
index coating

508

form second polymer
material layer

510

500

Fig. 5

Fig. 6

# EP 3 812 742 A1

Europäisches Patentamt
European Patent Office
Office européen des brevets

## EUROPEAN SEARCH REPORT

Application Number

EP 19 20 5101

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HESSLER S ET AL: "Temperature corrected lab-on-a-chip platform with integrated epoxy polymer Bragg gratings", PROCEEDINGS OF SPIE; [PROCEEDINGS OF SPIE ISSN 0277-786X VOLUME 10524], SPIE, US, vol. 10680, 9 May 2018 (2018-05-09), pages 106800Q-106800Q, XP060107666, DOI: 10.1117/12.2306250 ISBN: 978-1-5106-1533-5 * the whole document * | 1-15 | INV. G01N21/41 G01N21/77 G01N21/05 |
| Y | ROSENBERGER M ET AL: "TiOsurface functionalization of COC based planar waveguide Bragg gratings for refractive index sensing", JOURNAL OF OPTICS, INSTITUTE OF PHYSICS PUBLISHING, BRISTOL GB, vol. 20, no. 1, 20 December 2017 (2017-12-20), XP020323184, ISSN: 2040-8986, DOI: 10.1088/2040-8986/AA9BCF [retrieved on 2017-12-20] * the whole document * | 1-15 | |
| X | Michael Förthner: "Geprägte Bragg-Gitter Sensoren auf Basis von Hybridpolymeren", , 4 December 2018 (2018-12-04), XP055695192, Retrieved from the Internet: URL:https://d-nb.info/1175626090/34 [retrieved on 2020-05-14] | 1-11 | TECHNICAL FIELDS SEARCHED (IPC)<br><br>G01N |
| Y | * page 131 - page 177 * | 12-15 | |
| A | GB 2 222 881 A (SIRA LTD [GB]) 21 March 1990 (1990-03-21) * page 2, line 18 - page 3, line 8; page 5, lines 3-7; Fig. 3; claims 1, 6, 8 * | 1-15 | |

-/--

The present search report has been drawn up for all claims

| Place of search | Date of completion of the search | Examiner |
|---|---|---|
| Munich | 18 May 2020 | Flentje, Farida |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 774 290 A1 (UNIV SOUTHAMPTON [GB]) 18 April 2007 (2007-04-18) * paragraphs [0009], [0054], [0055] * ----- | 1-15 | |

TECHNICAL FIELDS
SEARCHED      (IPC)

The present search report has been drawn up for all claims

| Place of search | Date of completion of the search | Examiner |
|---|---|---|
| Munich | 18 May 2020 | Flentje, Farida |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 20 5101

18-05-2020

| Patent document cited in search report | | Publication date | Patent family member(s) | | Publication date |
|---|---|---|---|---|---|
| GB 2222881 | A | 21-03-1990 | NONE | | |
| EP 1774290 | A1 | 18-04-2007 | AT | 450790 T | 15-12-2009 |
| | | | AU | 2005263893 A1 | 26-01-2006 |
| | | | CA | 2573097 A1 | 26-01-2006 |
| | | | EP | 1774290 A1 | 18-04-2007 |
| | | | ES | 2336466 T3 | 13-04-2010 |
| | | | IL | 180287 A | 30-06-2011 |
| | | | JP | 4699459 B2 | 08-06-2011 |
| | | | JP | 2008506940 A | 06-03-2008 |
| | | | US | 2008204747 A1 | 28-08-2008 |
| | | | WO | 2006008447 A1 | 26-01-2006 |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060127024 A1

**Non-patent literature cited in the description**

- **W. LIANG et al.** *Appl. Phys. Lett.,* 2005, vol. 86 (15), 151122
- **S. HESSLER et al.** *Sensors & Actuators B: Chemical,* 2017, vol. 239, 916
- **ROSENBERGER et al.** *Journal of Optics,* 2017, vol. 20 (1), 01LT02
- **M. ROSENBERGER et al.** *Journal of Optics,* 2017, vol. 20 (1), 01LT02